# EUROPEAN PATENT SPECIFICATION

(11) **EP 3 696 996 B1**
(45) Date of publication and mention of the grant of the patent: **04.10.2023**
(21) Application number: 18866378.5
(22) Date of filing: 11.10.2018
(51) Int. Cl.: H04B 10/079, H04J 14/00, H04B 10/293, H04B 10/291

(54) **RELAY CONFIGURATION METHOD, SERVER AND COMPUTER-READABLE STORAGE MEDIUM**
RELAISKONFIGURATIONSVERFAHREN, SERVER UND COMPUTERLESBARES SPEICHERMEDIUM
PROCÉDÉ DE CONFIGURATION DE RELAIS, SERVEUR, ET SUPPORT DE STOCKAGE LISIBLE PAR ORDINATEUR

(30) Priority: 11.10.2017 CN 201710940713
(43) Date of publication of application: 19.08.2020
(73) Proprietor: ZTE Corporation, Shenzhen, Guangdong 518057 (CN)
(72) Inventor: MA, Zhimin, Shenzhen Guangdong 518057 (CN)
(74) Representative: Regimbeau
(86) International application number: PCT/CN2018/109779
(87) International publication number: WO 2019/072203

(56) References cited:
- EP-A1- 0 582 406
- EP-B1- 0 582 406
- WO-A1-2015/161473
- WO-A1-2015/161473
- CN-A- 101 834 740
- CN-A- 102 946 280
- CN-A- 108 631 862
- US-A1- 2004 208 517
- US-A1- 2010 129 081

## Description

### TECHNICAL FIELD

The present application relates to the field of communication technologies, for example, to a relay configuration method, a server and a computer-readable storage medium.

### BACKGROUND

In the field of optical communication, with the rapid development of a wavelength-division multiplexing (WDM) optical network, more and more services are carried in the WDM network and service transmission is required between more and more service stations.

Consideration about the transmission performance problem between multiple service stations in the WDM network is required during the planning and construction period. In the case where a certain transmission performance is restricted, the optical signal-to-noise ratio (OSNR) is the most important performance index. A WDM system has a system OSNR tolerance, that is, the minimum OSNR value at which a service signal can be successfully parsed at a service receiving end. When the OSNR value of a received service signal is less than this tolerance, the receiving end cannot correctly parse the service signal. As a result, the service cannot be transmitted normally. A solution to this problem is to add electrical relay stations between two service stations so that the OSNR value of the service receiving end can be increased to a value greater than the OSNR tolerance. In view of the costs of network construction, a minimum number of relays are recommended. That is, it is good to perform relaying as little as possible at service stations in a service route. In the related art, from one endpoint of a service route and along the service route, a service station that has an OSNR value not less than an OSNR tolerance and is farthest from this endpoint is searched for. After such a service station is found, this service station is set as a relay station. From this relay station as an endpoint, a search for subsequent relay stations in the same manner is continued until the other endpoint of the service route is found.

In the related art, a minimum number of relays are ensured, but the problem of OSNR value reduction caused by the aging of optical fibers is not taken into account. With the aging of the optical fibers, transmission is likely to fail by using a related relay configuration scheme. Nowadays, as the network scale and the service scale are increasing, more and more services can be transmitted normally only through electrical relays. Therefore, it is of great significance to enable a network planning result to have better robustness by providing a relay configuration scheme that can better resist the aging of optical fibers without increasing the number of relays in a service route. Further relevant technologies are also known from WO2015161473 A1 which relates to a method and device for optimizing performance of optical communication network, EP0582406 A1 which discloses a pump laser control circuit for an optical transmission system, US2010/129081 A1 which discloses a distributed Raman amplifier and optical communication system, and CN108631862 A which provides a relay configuration method and device, and a network management system.

### SUMMARY

The present application provides a method for optimizing a relay configuration, a server and a computer-readable storage medium according to independent claims to solve the problem in which network transmission is affected by aging of optical fibers that is not considered when relay configuration is performed in the related art. Further improvements and embodiments are provided in the dependent claims.

In one aspect, the present application provides a method for optimizing relay configuration. The method includes traversing a plurality of relay stations to determine a relay configuration scheme having a maximum minimum optical signal-to-noise ratio (OSNR) value among a plurality of configuration schemes; and using the relay configuration scheme having the maximum minimum OSNR value as a final optimized relay configuration scheme.

In another aspect, the present application further provides a server. The server includes a processor, a memory and a communication bus. The communication bus is configured to enable communication connection between the processor and the memory. The processor is configured to execute computer instructions stored in the memory to perform the preceding method for optimizing the relay configuration.

In yet another aspect, the present application further provides a computer-readable storage medium, which is configured to store at least one program executable by at least one processor so that the preceding method for optimizing the relay configuration is performed.

### BRIEF DESCRIPTION OF DRAWINGS

FIG. 1 is a flowchart of a relay configuration method according to an embodiment of the present application;
FIG. 2 is a network topology diagram according to an embodiment of the present application;
FIG. 3 is a flowchart of determining a relay station configuration scheme according to an embodiment of the present application; and
FIG. 4 is a structure diagram of a terminal according to an embodiment of the present application.

### DETAILED DESCRIPTION

To solve the problem in which network transmission is affected by the aging of optical fibers that is not considered when relay configuration is performed in the related art, the present application provides method for optimizing a relay configuration. Through the steps of traversing a plurality of relay stations to determine a relay configuration scheme having a maximum minimum optical signal-to-noise ratio (OSNR) value among a plurality of configuration schemes; and using the relay configuration scheme having the maximum minimum OSNR value as a final optimized relay configuration scheme, the method improves network transmission performance and thus improves user experience. The present application will be explained and described in detail by using several application examples.

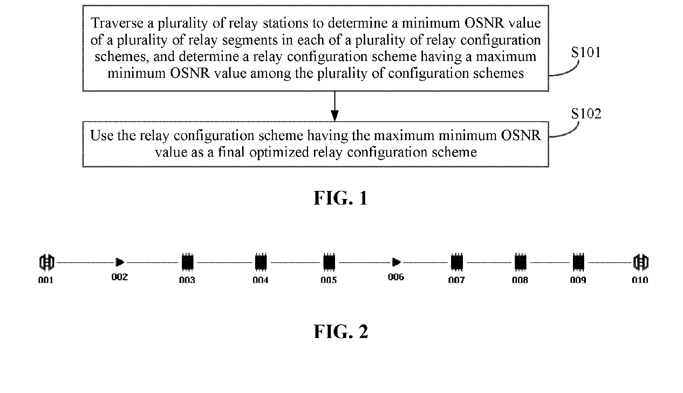

An embodiment of the present application provides a relay configuration method. Referring to FIG. 1, the method includes step S101 and step S102.

In step S101, a plurality of relay stations are traversed so that a minimum optical signal-to-noise ratio (OSNR) value of a plurality of relay segments in each of a plurality of relay configuration schemes is determined, and a relay configuration scheme having a maximum minimum OSNR value among the plurality of configuration schemes is determined.

In step S102, the relay configuration scheme having the maximum minimum OSNR value is used as a final optimized relay configuration scheme.

That is, in the present application, a plurality of relay stations are traversed so that a minimum optical signal-to-noise ratio (OSNR) value of a plurality of relay segments of each of a plurality of relay configuration schemes is determined, and a relay configuration scheme having a maximum minimum OSNR value among the plurality of configuration schemes is determined; and the relay configuration scheme having the maximum minimum OSNR value is used as a final optimized relay configuration scheme, so that network transmission performance is improved and thus user experience is improved.

That is, in the present application, in the case where the number of relays is known in a service route, a relay configuration scheme that is best resistant to the aging of optical fibers can be found to provide a more effective guarantee for network planning and construction and make a network more robust and longer in operation time.

In an embodiment of the present application, it is feasible to determine a range of multiple relay stations first, to traverse the range of the relay stations to determine a minimum OSNR value of the relay segments in each of all relay configuration schemes, to determine a relay configuration scheme having a maximum minimum OSNR value among all configuration schemes, and then to apply the scheme having the maximum minimum OSNR value to relay configuration.

In an embodiment of the present application, step S101 includes obtaining a relay configuration scheme in a forward direction of a service route and a relay configuration scheme in a reverse direction of the service route, determining left boundaries and right boundaries of relay stations in each relay configuration scheme according to the relay configuration scheme in the forward direction and the relay configuration scheme in the reverse direction, and traversing the plurality of relay stations in sequence within ranges formed by the left boundaries and the right boundaries of the relay stations to determine the minimum OSNR value of the plurality of relay segments in the each of the plurality of relay configuration schemes, and determining the relay configuration scheme having the maximum minimum OSNR value among all of the configuration schemes.

That is, in order for the efficiency of traversing optimized relay configuration schemes to be improved, a plurality of relay stations are traversed in a certain order so that a minimum OSNR value of a plurality of relay segments in each of a plurality of relay configuration schemes is determined, and a relay configuration scheme having a maximum minimum OSNR value among the plurality of configuration schemes is determined.

In an embodiment of the present application, a relay configuration scheme in a forward direction and a relay configuration scheme in a reverse direction of a service route are obtained, left boundaries and right boundaries of relay stations in each relay configuration scheme are determined according to the relay configuration scheme in the forward direction and the relay configuration scheme in the reverse direction, and the plurality of relay stations are traversed in sequence within ranges formed by the left boundaries and the right boundaries of the relay stations so that the minimum OSNR value of the plurality of relay segments in the each of the plurality of relay configuration schemes is quickly determined, and the relay configuration scheme having the maximum minimum OSNR value among all of the configuration schemes is determined.

In an embodiment of the present application, the step of determining the left boundaries and the right boundaries of the relay stations in each relay configuration scheme according to the relay configuration scheme in the forward direction and the relay configuration scheme in the reverse direction includes determining the right boundaries of the relay stations in each relay configuration scheme according to the relay configuration scheme in the forward direction and determining the left boundaries of the relay stations of each relay configuration scheme according to the relay configuration scheme in the reverse direction. That is, multiple relay stations in the relay configuration scheme in the forward direction are configured as the right boundaries of multiple relay segments and multiple relay stations in the relay configuration scheme in the reverse direction are configured as the left boundaries of multiple relay segments.

In an embodiment of the present application, multiple relay boundaries are combined into ranges for multiple relay stations and the relay stations are traversed within the ranges.

In an embodiment of the present application, the step of traversing the plurality of relay stations in sequence within the ranges formed by the left boundaries and the right boundaries of the relay stations to determine the minimum OSNR value of the plurality of relay segments in the each of the plurality of relay configuration schemes, and determining the relay configuration scheme having the maximum minimum OSNR value among all of the configuration schemes includes arranging and combining the plurality of relay stations from left to right within the ranges formed by the left boundaries and the right boundaries of the relay stations, calculating the minimum OSNR value of the plurality of relay segments in the each of the plurality of relay configuration schemes, and determining the relay configuration scheme having the maximum minimum OSNR value among all of the configuration schemes.

In an embodiment of the present application, the step of arranging and combining the plurality of relay stations from left to right within the ranges formed by the left boundaries and the right boundaries of the relay stations, calculating the minimum OSNR value of the plurality of relay segments in the each of the plurality of relay configuration schemes, and determining the relay configuration scheme having the maximum minimum OSNR value among all of the configuration schemes includes taking left boundaries of a plurality of relay ranges from the ranges of the left boundaries and the right boundaries of the relay stations to form a relay configuration scheme; obtaining a minimum OSNR value among OSNR values of relay segments of the relay configuration scheme, determining whether the minimum OSNR value is greater than an OSNR tolerance of a relay configuration system, and if the minimum OSNR value is greater than the OSNR tolerance, using a left endpoint of a relay segment corresponding to the minimum OSNR value in the current relay configuration scheme as an index station for next traversal to continue traversal, until the index station is a left endpoint of the service route or the index station is a right boundary of a relay range in which the index station is located; and calculating the minimum OSNR value of the plurality of relay segments in the each of the plurality of relay configuration schemes and calculating the relay configuration scheme having the maximum minimum OSNR value among all of the configuration schemes.

That is, in this embodiment of the present application, it is feasible to traverse all relay configuration schemes, and then use the relay configuration scheme having the maximum minimum OSNR value as the final optimized relay configuration scheme.

Of course, the method of determining the final optimized relay configuration scheme includes setting an OSNR threshold x to the OSNR tolerance of the relay configuration system; in first traversal, taking left boundaries of a plurality of relay ranges to form a first relay configuration scheme Yi, obtaining a minimum OSNR value xᵢ among OSNR values of relay segments in the first relay configuration scheme Yi, determining whether the OSNR value xᵢ is greater than the OSNR threshold x, and if the OSNR value xᵢ is greater than the OSNR threshold x, setting the OSNR threshold x to the minimum OSNR value xᵢ among the OSNR values of the relay segments of the first relay configuration scheme Y₁, and using a left endpoint of a relay segment corresponding to the minimum OSNR value in the current relay configuration scheme as an index station for next traversal to continue traversal, until the index station is a left endpoint of the service route or the index station is a right boundary of a relay range in which the index station is located; and calculating that the current first relay configuration scheme is the relay configuration scheme having the maximum minimum OSNR value in minimum OSNR values of the plurality of relay segments.

In general, in this embodiment of the present application, it is feasible to traverse all relay configuration schemes, and then to determine the optimal relay configuration scheme. Of course, it is also feasible to use the preceding method to determine the current relay configuration scheme as the optimal relay configuration scheme by repeatedly setting the minimum OSNR value xᵢ.

In an embodiment of the present application, the step of using the left endpoint of the relay segment corresponding to the minimum OSNR value in the current relay configuration scheme as the index station for the next traversal to continue traversal, includes using the index station and relay stations on a left of a right boundary of the plurality of relay ranges to form a relay configuration scheme to continue traversing.

That is, in the present application, the values of one or more traversed relay ranges on the left of the relay range in which the index station is located are unchanged, and a service station that is capable of being set as a relay and that is adjacent to and on the right of the index station within the relay range in which the index station is located is used as the value of the current range. If other relay ranges exist on the right of the relay range in which the index station is located, the left boundary stations of all relay ranges on the right of the relay range in which the index station is located and the index station form the relay configuration scheme Yi, and the minimum OSNR value of this relay configuration scheme is determined.

In an embodiment of the present application, the method for optimizing the relay configuration further includes determining whether relay stations in the final relay configuration scheme satisfy transmission requirements; if the relay stations in the final relay configuration scheme all satisfy the transmission requirements, using the relay configuration scheme having the maximum minimum OSNR value as the final optimized relay configuration scheme; if the relay stations in the final relay configuration scheme do not all satisfy the transmission requirements, selecting a relay configuration scheme having the maximum minimum OSNR value and satisfying the transmission requirements as the final optimized relay configuration scheme.

Transmission constraints (transmission requirements) described in this embodiment of the present application include polarization mode dispersion (PMD), system margin, power fluctuation cost, erbium-doped optical fiber amplifier (EDFA) gain unflatness cost, non-linear cost, filter cost, residual dispersion, etc.

In an embodiment of the present application, the determined final relay configuration scheme needs to satisfy the preceding transmission constraints. If the determined final relay configuration scheme does not satisfy the preceding transmission restriction conditions, another optimized relay configuration scheme is selected as the final relay configuration scheme.

The beneficial effects of the present application are as follows: Through the steps of traversing a plurality of relay stations to determine a relay configuration scheme having a maximum minimum optical signal-to-noise ratio (OSNR) value among a plurality of configuration schemes; and using the relay configuration scheme having the maximum minimum OSNR value as a final optimized relay configuration scheme, the method for optimizing the relay configuration improves network transmission performance and thus improves user experience.

In order that the present application is better described, the method described herein will be explained and described in detail by using an application embodiment.

FIG. 2 is a network topology diagram according to an embodiment of the present application. As shown in FIG. 2, in the network topology diagram of this embodiment, stations 003, 004, 005, 007, 008 and 009 are all stations that can be configured to serve as a relay, and stations 002 and 006 are stations that cannot be configured to serve as a relay. It is assumed that a service whose receiving station and sending station are 001 and 010 respectively has a system OSNR tolerance of x₀ (19 dB). Relaying is performed in the route 001-002-003-003-004-005-006-007-008-009-010 at least n times. Starting from endpoint 001, the OSNR values of segments from 001 to multiple service stations are obtained. The OSNR values of 001-(002)-003, 001-(002)-003-004, 001-(002)-003-004-005 and 001-(002)-003-004-005-(006)-007 are 22.95 dB, 20.37 dB, 19.17 dB and 17.65 dB respectively. Apparently, 19.17 > 19, and 17.65 < 19. The OSNR value of the route formed by stations 001 to 005, the station 001 to a service station before station 005 is not less than the system OSNR tolerance x₀. The OSNR value of the route formed by the station 001 to a service station after station 005 is less than the system OSNR tolerance x₀. Thus, a relay is required at station 005. Then, the preceding process is continued by using station 005 as the start endpoint so that the OSNR values of segments 005-(006)-007, 005-(006)-007-008, 005-(006)-007-008-009 and 005-(006)-007-008-009-010 are found to be 22.95 dB, 20.97 dB, 19.61 dB and 18.58 dB respectively. Apparently, 19.61 > 19, and 18.58 < 19. The OSNR value of the route formed by stations 005 to 009 or the station 005 to a service station before 009 is not less than the system OSNR tolerance x₀. The OSNR value of the route formed by the station 005 to a service station after the station 009 is less than the system OSNR tolerance x₀. Thus, a relay is required at station 009. Then, the preceding process is continued by using station 009 as the start endpoint so that the other endpoint of the service is found to be 010 and the OSNR value of segment 009-010 is found to be 25.33 dB. 25.33 dB is greater than the system OSNR tolerance x₀. That is, the OSNR value for service transmission satisfies the requirement. In this manner, a relay station configuration scheme is obtained. This scheme is assumed to be Y₀ (005, 009). That is, relays are configured at stations 005 and 009 and n = 2. Segments after relaying include 001-002-003-004-005, 005-006-007-008-009 and 009-010. The OSNR values of 001-002-003-004-005, 005-006-007-008-009 and 009-010 are x₁ (19.17 dB), x₂ (19.61 dB) and x₃ (25.33 dB) respectively. The minimum value of x₁, x₂ and x₃ are assumed to be x_{Y0}. Thus x_{Y0} = 19.17 dB. Since the system OSNR tolerance x is 19 dB, the OSNR margin left for the aging of optical fibers by this scheme is only x_{Y0} - x₀ = 0.17 dB. Since n = 2, other schemes may be denoted as Yᵢ (j, k). j and k denote two relay stations of a relay configuration scheme. That is, relays are performed at stations j and k. There must be a scheme in which the OSNR margin x_{Y0} - x₀ left for the aging of optical fibers is the largest among all schemes. The purpose of the present application is to find this scheme. In the case where the system OSNR tolerance x₀ of the service is a constant value, the scheme to be sought in the present application is a scheme having the maximum x_{Yi}.

It is assumed that the OSNR tolerance x₀ is 19 dB. The method of searching for Y₀ is used to obtain that the relay configuration scheme in the forward direction (001-->010) of the service route is Y₀ (005, 009) and the relay configuration scheme in the reverse direction (010-->001) of the service route is Y₀' (007, 003).

Multiple relay stations in the relay configuration scheme in the forward direction Y₀ (005, 009) are set as the right boundaries of multiple relay segments. That is, stations j of all relay configuration schemes Yᵢ (j, k) are at station 005 or on the left (the side having station 001) of station 005, and stations k of all relay configuration schemes Yᵢ (j, k) are at station 009 or on the left (the side having station 001) of station 009.

Multiple relay stations in the relay configuration scheme in the reverse direction Y₀' (007, 003) are arranged in the forward direction of the service route so that Y₀' (003, 007) is obtained. The relay stations are set as the left boundaries of multiple relay segments. That is, stations j of all relay configuration schemes Yᵢ (j, k) are at station 003 or on the right (the side having station 010) of station 003, and stations k of all relay configuration schemes Yᵢ (j, k) are at station 007 or on the right (the side having station 010) of station 007.

After the left and right boundaries are determined, the configured ranges of the two relay stations are determined. That is, station j of any relay configuration scheme Yᵢ (j, k) ranges from station 003 to station 005 and station k of any relay configuration scheme Yᵢ (j, k) ranges from station 007 to station 009.

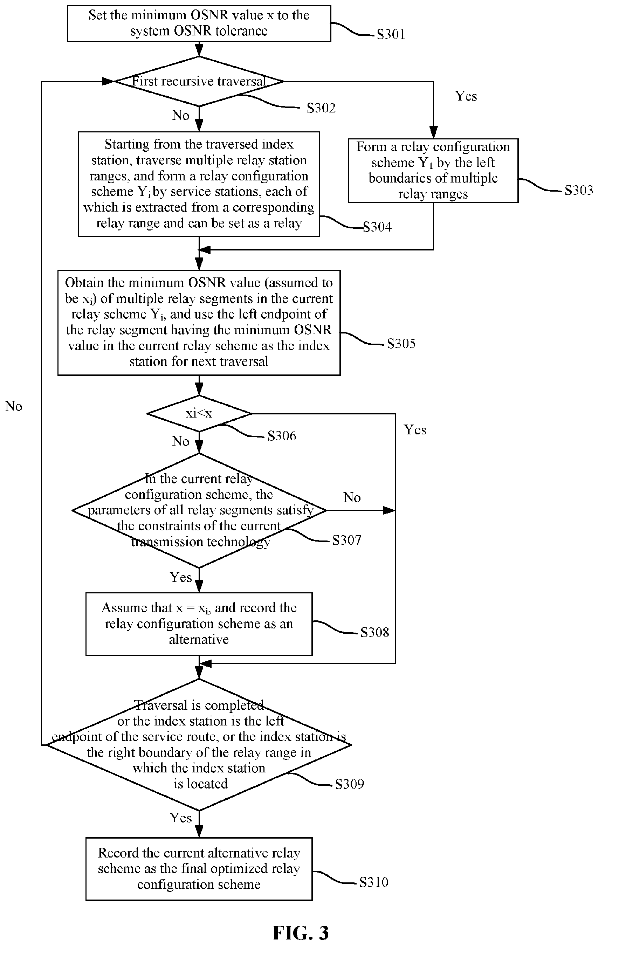

FIG. 3 is a flowchart of determining a relay station configuration scheme according to an embodiment of the present application. As shown in FIG. 3, the method includes the steps S301 to S310 described below.

In step S301, the minimum OSNR value x is set to the system OSNR tolerance, that is, x = x₀ and x = 19 dB.

In step S302, it is determined whether traversal is performed for the first time; if traversal is performed for the first time, the process goes to the next step; if traversal is performed not for the first time, the process goes to step S304.

In step S303, the left boundaries of multiple relay ranges are caused to form a relay configuration scheme Y₁ (003, 007), and then the process goes to step S305.

In step S304, starting from the traversed index station, multiple relay station ranges are traversed and service stations, each of which is extracted from a corresponding relay range and can be set as a relay, are used to form a relay configuration scheme Y₁.

In step S305, the OSNR values of multiple relay segments divided according to the current relay configuration scheme are obtained.

For example, the OSNR values of multiple relay segments of the relay configuration scheme Y₁ (003, 007) are described below.

The OSNR value of 001-002-003 is 22.95 dB.

The OSNR value of 003-004-005-006-007 is 19.17 dB.

The OSNR value of 007-008-009-010 is 20.56 dB.

Thus, the minimum OSNR value of the multiple relay segments is x₁ (19.17 dB). The relay segment corresponding to 19.17 dB is 003-004-005-006-007. The left endpoint 003 of 003-004-005-006-007 is set as the index station for next traversal.

In step S306, x1 is compared with x, where 19.17 > 19, and then the process goes to step S307.

In step S307, assuming that in the scheme Yi, the parameters of all relay segments satisfy the constraints of the current transmission technology, where the parameters include PMD, system margin, power fluctuation cost, EDFA gain unflatness cost, non-linear cost, filter cost, and residual dispersion, the process goes to S308.

In step S308, it is assumed that x = x₁, that is, x = 19.17 dB, and the relay configuration scheme Y₁ (003, 007) is recorded as an alternative.

In step S309, index station 003 is neither the left endpoint 001 of the service route nor the right boundary 005 of the relay range [003, 004, 005] in which index station 003 is located; starting from the traversed index station, multiple relay station ranges are traversed, and service stations, each of which is extracted from a corresponding relay range and can be set as a relay, are used to form a relay configuration scheme Yᵢ.

In step S310, it is determined whether traversal is completed; if traversal is not completed, the process goes to step S302 to continue traversal.

In step S304, there is no relay range on the left of the relay range in which the index station 003 is located, service station 004 that can be set as a relay and that is adjacent to and on the right of index station 003 within the relay range in which index station 003 is located is used as the value of the current range, there are relay ranges [007, 008, 009] on the right of the relay range in which the index station 003 is located, the left boundary station 007 of all relay ranges [007, 008, 009] on the right of the relay range in which index station 003 is located and index station 004 that is the traversal value of S304 form the relay configuration scheme Y₂ (004, 007), and the process goes to S302 to continue traversal.

In step S305, the OSNR values of multiple relay segments divided according to the current relay configuration scheme Y₂ are obtained.

The OSNR value of 001-002-003-004 is 20.37 dB.

The OSNR value of 004-005-006-007 is 20.97 dB.

The OSNR value of 007-008-009-010 is 20.56 dB.

Thus, the minimum OSNR value of the multiple relay segments is x₂ (20.37 dB). The relay segment corresponding to 20.37 dB is 001-002-003-004. The left endpoint 001 of 001-002-003-004 is set as the index station for next traversal.

In step S306, x₂ is compared with x, where 20.37 > 19.17.

In step S307, assuming that in the scheme Y₂ (004, 007), the parameters of all relay segments satisfy the constraints of the current transmission technology, the process goes to S308.

In step S308, it is assumed that x = x₂, that is, x = 20.37 dB, and the relay configuration scheme Y₂ (004, 007) is recorded as an alternative.

Since index station 001 is the left endpoint of the service route, the current alternative relay configuration scheme Y₂ (004, 007) is recorded as the final optimized relay configuration scheme.

The relay configuration scheme Y₂ (004, 007) is applied to relay configuration, that is, relays are configured at stations 004 and 007. The OSNR margin left for the aging of optical fibers by the scheme Y₂ (004, 007) is x_{Y2} - x₀ = 20.37 - 19 = 1.37 dB. 1.37 dB is 1.2 dB higher than 0.17 dB of the scheme Y₀.

That is, in the case where multiple relay ranges are determined, by the relay configuration method described herein, only two schemes is obtained, there is no need to obtain nine schemes by combining relay stations in all relay ranges. The relay configuration method described in the present application can also be used to quickly and accurately perform relay configuration having optimized anti-aging performance in a service route having more relays. Compared with the anti-fiber-aging performance of the configuration result in the related art, the relay configuration method described herein can be used to quickly find a solution capable of resisting the aging of optical fibers to the maximum extent while minimizing the traversal range to the maximum extent, and enables a network to have better stability while ensuring the efficiency.

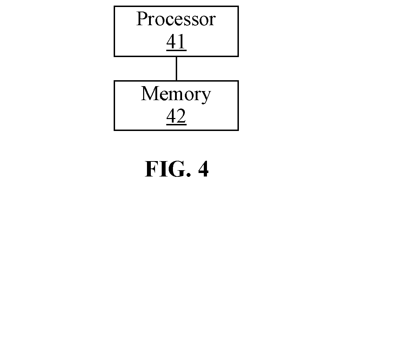

Accordingly, as shown in FIG. 4, an embodiment of the present application further provides a server. The server includes a processor 41, a memory 42 and a communication bus.

The communication bus is configured to enable communication connection between the processor 41 and the memory 42.

The memory 42 is configured to store computer instructions. The processor 41 is configured to execute the computer instructions stored in the memory to perform the steps of any method for optimizing the relay configuration of the present application and achieve corresponding effects.

Accordingly, an embodiment of the present application further provides a computer-readable storage medium, which stores at least one program executable by at least one processor so that the method for optimizing the relay configuration provided in any one of the preceding embodiments of the present application is performed and thus corresponding effects are achieved.

Since the method for optimizing the relay configuration provided in any one of the method embodiments of the present application has been explained in detail, details are not repeated here.

It is to be noted that the storage medium and the computer-readable storage medium described in embodiments of the present application are the same.

## Claims

1. A method for optimizing relay configuration, comprising:
traversing (S101) a plurality of relay stations to determine a minimum optical signal-to-noise ratio, OSNR, value of a plurality of relay segments in each of a plurality of relay configuration schemes, and determining a relay configuration scheme having a maximum value among the minimum OSNR values corresponding to the plurality of configuration schemes; and
using (S102) the relay configuration scheme having the maximum value among the minimum OSNR values as a final optimized relay configuration scheme; **characterized in that**:
the step of traversing (S101) the plurality of relay stations to determine the minimum OSNR value of the plurality of relay segments in the each of the plurality of relay configuration schemes, and determining the relay configuration scheme having the maximum value among the minimum OSNR values among the plurality of configuration schemes comprises:
obtaining a relay configuration scheme in a forward direction of a service route and a relay configuration scheme in a reverse direction of the service route, determining left boundaries and right boundaries of a plurality of relay stations in each relay configuration scheme according to the relay configuration scheme in the forward direction and the relay configuration scheme in the reverse direction, and traversing the plurality of relay stations in sequence within ranges formed by the left boundaries and the right boundaries of the relay stations to determine the minimum OSNR value of the plurality of relay segments in the each of the plurality of relay configuration schemes, and determining the relay configuration scheme having the maximum value among the minimum OSNR values among all of configuration schemes;
wherein the step of traversing the plurality of relay stations in sequence within the ranges formed by the left boundaries and the right boundaries of the relay stations to determine the minimum OSNR value of the plurality of relay segments in the each of the plurality of relay configuration schemes, and determining the relay configuration scheme having the maximum value among the minimum OSNR values among all of the configuration schemes comprises:
arranging and combining the plurality of relay stations from left to right within the ranges formed by the left boundaries and the right boundaries of the relay stations, calculating the minimum OSNR value of the plurality of relay segments in the each of the plurality of relay configuration schemes, and determining the relay configuration scheme having the maximum value among the minimum OSNR values among all of the configuration schemes.

2. The method of claim 1, wherein the step of determining the left boundaries and the right boundaries of the plurality of relay stations in each relay configuration scheme according to the relay configuration scheme in the forward direction and the relay configuration scheme in the reverse direction comprises:
determining the right boundaries of the plurality of relay stations in each relay configuration scheme according to the relay configuration scheme in the forward direction and determining the left boundaries of the plurality of relay stations in each relay configuration scheme according to the relay configuration scheme in the reverse direction.

3. The method of claim 1, wherein the step of arranging and combining the plurality of relay stations from left to right within the ranges formed by the left boundaries and the right boundaries of the relay stations, calculating the minimum OSNR value of the plurality of relay segments in the each of the plurality of relay configuration schemes, and determining the relay configuration scheme having the maximum value among the minimum OSNR values among all of the configuration schemes comprises:
taking left boundaries of a plurality of relay ranges from the ranges of the left boundaries and the right boundaries of the relay stations to form a relay configuration scheme;
obtaining a minimum OSNR value among OSNR values of a plurality of relay segments of the relay configuration scheme, determining whether the minimum OSNR value is greater than an OSNR tolerance of a relay configuration system, and in response to determining that the minimum OSNR value is greater than the OSNR tolerance, using a left endpoint of a relay segment corresponding to the minimum OSNR value in the current relay configuration scheme as an index station for next traversal to continue traversal, until the index station is a left endpoint of the service route or the index station is a right boundary of a relay range in which the index station is located; and
calculating the minimum OSNR value of the plurality of relay segments in the each of the plurality of relay configuration schemes and calculating the relay configuration scheme having the maximum value among the minimum OSNR values among all of the configuration schemes.

4. The method of claim 1, wherein the step of arranging and combining the plurality of relay stations from left to right within the ranges formed by the left boundaries and the right boundaries of the relay stations, calculating the minimum OSNR value of the plurality of relay segments in the each of the plurality of relay configuration schemes, and determining the relay configuration scheme having the maximum value among the minimum OSNR values among all of the configuration schemes comprises:
setting an OSNR threshold x to an OSNR tolerance of a relay configuration system;
in a first traversal, taking left boundaries of a plurality of relay ranges to form a first relay configuration scheme Yi, obtaining a minimum OSNR value xᵢ among OSNR values of a plurality of relay segments in the first relay configuration scheme Yi, and determining whether the OSNR value xᵢ is greater than the OSNR threshold x; and in response to determining that the OSNR value xᵢ is greater than the OSNR threshold x, setting the OSNR threshold x to the minimum OSNR value xᵢ among the OSNR values of the plurality of relay segments in the first relay configuration scheme Yi, and using a left endpoint of a relay segment corresponding to the minimum OSNR value in the current relay configuration scheme as an index station for next traversal to continue traversal until the index station is a left endpoint of the service route or the index station is a right boundary of a relay range in which the index station is located; and
calculating that the current relay configuration scheme is the relay configuration scheme having the maximum value among the minimum OSNR values of the plurality of relay segments.

5. The method of claim 4, after using the left endpoint of the relay segment corresponding to the minimum OSNR value in the current relay configuration scheme as the index station for the next traversal to continue the traversal, further comprising:
using the index station and relay stations on left of right boundaries of the plurality of relay ranges to form a relay configuration scheme to continue traversing.

6. The method of claim 1, further comprising:
determining whether relay stations in the final relay configuration scheme satisfy a transmission requirement; in response to determining that the relay stations in the final relay configuration scheme all satisfy the transmission requirement, using the relay configuration scheme having the maximum value among the minimum OSNR values as the final optimized relay configuration scheme; in response to determining that the relay stations in the final relay configuration scheme do not all satisfy the transmission requirement, selecting a relay configuration scheme having the maximum value among the minimum OSNR values and satisfying the transmission requirement as the final optimized relay configuration scheme.

7. A server, comprising a processor (41), a memory (42) and a communication bus, wherein
the communication bus is configured to enable communication connection between the processor (41) and the memory (42); and
the processor (41) is configured to execute computer instructions stored in the memory to perform the method for optimizing the relay configuration of any one of claims 1 to 6.

8. A computer-readable storage medium, on which is stored at least one program, which, when executed by at least one processor (41), cause the at least one processor (41) to perform the method for optimizing the relay configuration of any one of claims 1 to 6.

## Patentansprüche

1. Verfahren zur Optimierung der Relaiskonfiguration, umfassend:
Durchlaufen (S101) einer Vielzahl von Relaisstationen, um einen minimalen Wert des optischen Signal-Rausch-Verhältnisses, OSNR, einer Vielzahl von Relaissegmenten in jedem einer Vielzahl von Relaiskonfigurationsschemata zu bestimmen, und Bestimmen eines Relaiskonfigurationsschemas, das einen maximalen Wert unter den minimalen OSNR-Werten, die der Vielzahl von Konfigurationsschemata entsprechen, aufweist; und
Verwenden (S102) des Relaiskonfigurationsschemas, das den maximalen Wert unter den minimalen OSNR-Werten aufweist, als ein endgültiges optimiertes Relaiskonfigurationsschema;
**dadurch gekennzeichnet, dass**
der Schritt des Durchlaufens (S101) einer Vielzahl von Relaisstationen, um einen minimalen Wert des OSNR einer Vielzahl von Relaissegmenten in jedem der Vielzahl von Relaiskonfigurationsschemata zu bestimmen, und des Bestimmens des Relaiskonfigurationsschemas, das den maximalen Wert unter den minimalen OSNR-Werten unter der Vielzahl von Konfigurationsschemata aufweist, umfasst:
Ermitteln eines Relaiskonfigurationsschemas in einer Vorwärtsrichtung einer Serviceroute und eines Relaiskonfigurationsschemas in einer Rückwärtsrichtung der Serviceroute, Bestimmen von linken Grenzen und rechten Grenzen einer Vielzahl von Relaisstationen in jedem Relaiskonfigurationsschema gemäß dem Relaiskonfigurationsschema in der Vorwärtsrichtung und dem Relaiskonfigurationsschema in der Rückwärtsrichtung, und Durchlaufen der Vielzahl von Relaisstationen in Folge innerhalb von Bereichen, die durch die linken Grenzen und die rechten Grenzen der Relaisstationen gebildet werden, um den minimalen OSNR-Wert der Vielzahl von Relaissegmenten in jedem der Vielzahl von Relaiskonfigurationsschemata zu bestimmen, und Bestimmen des Relaiskonfigurationsschemas, das den maximalen Wert unter den minimalen OSNR-Werten unter allen Konfigurationsschemata aufweist;
wobei der Schritt des Durchlaufens der Vielzahl von Relaisstationen in Folge innerhalb der Bereiche, die durch die linken Grenzen und die rechten Grenzen der Relaisstationen gebildet werden, um den minimalen OSNR-Wert der Vielzahl von Relaissegmenten in jedem der Vielzahl von Relaiskonfigurationsschemata zu bestimmen, und des Bestimmens des Relaiskonfigurationsschemas, das den maximalen Wert unter den minimalen OSNR-Werten unter allen Konfigurationsschemata aufweist, umfasst:
Anordnen und Kombinieren der Vielzahl von Relaisstationen von links nach rechts innerhalb der Bereiche, die durch die linken Grenzen und die rechten Grenzen der Relaisstationen gebildet werden, Berechnen des minimalen OSNR-Werts der Vielzahl von Relaissegmenten in jedem der Vielzahl von Relaiskonfigurationsschemata und Bestimmen des Relaiskonfigurationsschemas, das den maximalen Wert unter den minimalen OSNR-Werten unter allen Konfigurationsschemata aufweist.

2. Verfahren nach Anspruch 1, wobei der Schritt des Bestimmens der linken Grenzen und der rechten Grenzen der Vielzahl von Relaisstationen in jedem Relaiskonfigurationsschema gemäß dem Relaiskonfigurationsschema in der Vorwärtsrichtung und dem Relaiskonfigurationsschema in der Rückwärtsrichtung umfasst:
Bestimmen der rechten Grenzen der Vielzahl von Relaisstationen in jedem Relaiskonfigurationsschema gemäß dem Relaiskonfigurationsschema in der Vorwärtsrichtung und Bestimmen der linken Grenzen der Vielzahl von Relaisstationen in jedem Relaiskonfigurationsschema gemäß dem Relaiskonfigurationsschema in der Rückwärtsrichtung.

3. Verfahren nach Anspruch 1, wobei der Schritt des Anordnens und Kombinierens der Vielzahl von Relaisstationen von links nach rechts innerhalb der Bereiche, die durch die linken Grenzen und die rechten Grenzen der Relaisstationen gebildet werden, des Berechnens des minimalen OSNR-Werts der Vielzahl von Relaissegmenten in jedem der Vielzahl von Relaiskonfigurationsschemata und des Bestimmens des Relaiskonfigurationsschemas, das den maximalen Wert unter den minimalen OSNR-Werten unter allen Konfigurationsschemata aufweist, umfasst:
Nehmen von linken Grenzen einer Vielzahl von Relaisbereichen von den Bereichen der linken Grenzen und der rechten Grenzen der Relaisstationen, um ein Relaiskonfigurationsschema zu bilden;
Ermitteln eines minimalen OSNR-Werts unter den OSNR-Werten einer Vielzahl von Relaissegmenten des Relaiskonfigurationsschemas, Bestimmen, ob der minimale OSNR-Wert größer als eine OSNR-Toleranz eines Relaiskonfigurationssystems ist, und als Reaktion auf das Bestimmen, dass der minimale OSNR-Wert größer als die OSNR-Toleranz ist, Verwenden eines linken Endpunkts eines Relaissegments, das dem minimalen OSNR-Wert in dem aktuellen Relaiskonfigurationsschema entspricht, als eine Indexstation für den nächsten Durchlauf, um das Durchlaufen fortzusetzen, bis die Indexstation ein linker Endpunkt der Serviceroute ist oder die Indexstation eine rechte Grenze eines Relaisbereichs ist, in dem sich die Indexstation befindet; und
Berechnen des minimalen OSNR-Werts der Vielzahl von Relaissegmenten in jedem der Vielzahl von Relaiskonfigurationsschemata und Berechnen des Relaiskonfigurationsschemas, das den maximalen Wert unter den minimalen OSNR-Werten unter allen Konfigurationsschemata aufweist.

4. Verfahren nach Anspruch 1, wobei der Schritt des Anordnens und Kombinierens der Vielzahl von Relaisstationen von links nach rechts innerhalb der Bereiche, die durch die linken Grenzen und die rechten Grenzen der Relaisstationen gebildet werden, des Berechnens des minimalen OSNR-Werts der Vielzahl von Relaissegmenten in jedem der Vielzahl von Relaiskonfigurationsschemata und des Bestimmens des Relaiskonfigurationsschemas, das den maximalen Wert unter den minimalen OSNR-Werten unter allen Konfigurationsschemata aufweist, umfasst:
Einstellen eines OSNR-Schwellenwerts x auf eine OSNR-Toleranz eines Relaiskonfigurationssystems;
in einem ersten Durchlauf Nehmen von linken Grenzen einer Vielzahl von Relaisbereichen, um ein erstes Relaiskonfigurationsschema Y₁ zu bilden, Ermitteln eines minimalen OSNR-Werts xᵢ unter den OSNR-Werten einer Vielzahl von Relaissegmenten in dem ersten Relaiskonfigurationsschema Y₁ und Bestimmen, ob der OSNR-Wert xᵢ größer als der OSNR-Schwellenwert x ist; und
als Reaktion auf das Bestimmen, dass der OSNR-Wert xᵢ größer als der OSNR-Schwellenwert x ist, Einstellen des OSNR-Schwellenwerts x auf den minimalen OSNR-Wert xᵢ unter den OSNR-Werten der Vielzahl von Relaissegmenten in dem ersten Relaiskonfigurationsschema Y₁ und Verwenden eines linken Endpunkts eines Relaissegments, das dem minimalen OSNR-Wert in dem aktuellen Relaiskonfigurationsschema entspricht, als eine Indexstation für den nächste Durchlauf, um das Durchlaufen fortzusetzen, bis die Indexstation ein linker Endpunkt der Serviceroute ist oder die Indexstation eine rechte Grenze eines Relaisbereichs ist, in dem sich die Indexstation befindet; und
Berechnen, dass das aktuelle Relaiskonfigurationsschema das Relaiskonfigurationsschema ist, das den maximalen Wert unter den minimalen OSNR-Werten der Vielzahl von Relaissegmenten aufweist.

5. Verfahren nach Anspruch 4, nach dem Verwenden des linken Endpunkts des Relaissegments, der dem minimalen OSNR-Wert in dem aktuellen Relaiskonfigurationsschema entspricht, als die Indexstation für den nächsten Durchlauf, um das Durchlaufen fortzusetzen, das weiter umfasst:
Verwenden der Indexstation und der Relaisstationen an der linken oder der rechten Grenze der Vielzahl von Relaisbereichen, um ein Relaiskonfigurationsschema zu bilden, um das Durchlaufen fortzusetzen.

6. Verfahren nach Anspruch 1, das weiter umfasst:
Bestimmen, ob Relaisstationen in dem endgültigen Relaiskonfigurationsschema eine Übertragungsanforderung erfüllen;
als Reaktion auf das Bestimmen, dass die Relaisstationen in dem endgültigen Relaiskonfigurationsschema alle die Übertragungsanforderung erfüllen, Verwenden des Relaiskonfigurationsschemas, das den maximalen Wert unter den minimalen OSNR-Werten aufweist, als das endgültige optimierte Relaiskonfigurationsschema;
als Reaktion auf das Bestimmen, dass die Relaisstationen in dem endgültigen Relaiskonfigurationsschema nicht alle die Übertragungsanforderung erfüllen, Auswählen eines Relaiskonfigurationsschemas, das den maximalen Wert unter den minimalen OSNR-Werten aufweist und die Übertragungsanforderung erfüllt, als das endgültige optimierte Relaiskonfigurationsschema.

7. Server umfassend einen Prozessor (41), einen Speicher (42) und einen Kommunikationsbus, wobei
der Kommunikationsbus so konfiguriert ist, dass er eine Kommunikationsverbindung zwischen dem Prozessor (41) und dem Speicher (42) ermöglicht; und
der Prozessor (41) so konfiguriert ist, dass er Computerbefehle ausführt, die in dem Speicher gespeichert sind, um das Verfahren zur Optimierung der Relaiskonfiguration nach einem der Ansprüche 1 bis 6 durchzuführen.

8. Computerlesbares Speichermedium, auf dem mindestens ein Programm gespeichert ist, das bei Ausführung von mindestens einem Prozessor (41) den mindestens einen Prozessor (41) veranlasst, das Verfahren zur Optimierung der Relaiskonfiguration nach einem der Ansprüche 1 bis 6 durchzuführen.

## Revendications

1. Procédé d'optimisation de configuration de relais, comprenant :
la traversée (S101) d'une pluralité de stations relais pour déterminer une valeur minimale de rapport signal optique sur bruit, OSNR, d'une pluralité de segments de relais dans chacun d'une pluralité de schémas de configuration de relais, et la détermination d'un schéma de configuration de relais ayant une valeur maximale parmi les valeurs minimales d'OSNR correspondant à la pluralité de schémas de configuration ; et
l'utilisation (S102) du schéma de configuration de relais ayant la valeur maximale parmi les valeurs minimales d'OSNR comme étant un schéma de configuration de relais optimisé final ; **caractérisé en ce que** :
l'étape de la traversée (S101) de la pluralité de stations relais pour déterminer la valeur minimale d'OSNR de la pluralité de segments de relais dans chacun de la pluralité de schémas de configuration de relais, et de la détermination du schéma de configuration de relais ayant la valeur maximale parmi les valeurs minimales d'OSNR parmi la pluralité de schémas de configuration comprend :
l'obtention d'un schéma de configuration de relais dans une direction avant d'une voie de service et d'un schéma de configuration de relais dans une direction inverse de la voie de service, la détermination de frontières gauches et de frontières droites d'une pluralité de stations relais dans chaque schéma de configuration de relais selon le schéma de configuration de relais dans la direction avant et le schéma de configuration de relais dans la direction inverse, et la traversée de la pluralité de stations relais en séquence au sein de plages formées par les frontières gauche et les frontières droites des stations relais pour déterminer la valeur minimale d'OSNR de la pluralité de segments de relais dans chacun de la pluralité de schémas de configuration de relais, et la détermination du schéma de configuration de relais ayant la valeur maximale parmi les valeurs minimales d'OSNR parmi tous les schémas de configuration ;
dans lequel l'étape de la traversée de la pluralité de stations relais en séquence au sein des plages formées par les frontières gauche et les frontières droites des stations relais pour déterminer la valeur minimale d'OSNR de la pluralité de segments de relais dans chacun de la pluralité de schémas de configuration de relais, et de la détermination du schéma de configuration de relais ayant la valeur maximale parmi les valeurs minimales d'OSNR parmi tous les schémas de configuration comprend :
l'agencement et la combinaison de la pluralité de stations relais de gauche à droite au sein des plages formées par les frontières gauche et les frontières droites des stations relais, le calcul de la valeur minimale d'OSNR de la pluralité de segments de relais dans chacun de la pluralité de schémas de configuration de relais, et la détermination du schéma de configuration de relais ayant la valeur maximale parmi les valeurs minimales d'OSNR parmi tous les schémas de configuration.

2. Procédé selon la revendication 1, dans lequel l'étape de la détermination des frontières gauches et les frontières droites de la pluralité de stations relais dans chaque schéma de configuration de relais selon le schéma de configuration de relais dans la direction avant et le schéma de configuration de relais dans la direction inverse comprend :
la détermination des frontières droites de la pluralité de stations relais dans chaque schéma de configuration de relais selon le schéma de configuration de relais dans la direction avant et la détermination des frontières gauches de la pluralité des stations relais dans chaque schéma de configuration de relais selon le schéma de configuration de relais dans la direction inverse.

3. Procédé selon la revendication 1, dans lequel l'étape de l'agencement et de la combinaison de la pluralité de stations relais de gauche à droite au sein des plages formées par les frontières gauche et les frontières droites des stations relais, du calcul de la valeur minimale d'OSNR de la pluralité de segments de relais dans chacun de la pluralité de schémas de configuration de relais, et de la détermination du schéma de configuration de relais ayant la valeur maximale parmi les valeurs minimales d'OSNR parmi tous les schémas de configuration comprend :
la prise de frontières gauches d'une pluralité de plages de relais à partir des plages des frontières gauche et des frontières droites des stations relais pour former un schéma de configuration de relais ;
l'obtention d'une valeur minimale d'OSNR parmi des valeurs d'OSNR d'une pluralité de segments de relais du schéma de configuration de relais, la détermination de si la valeur minimale d'OSNR est supérieure à une tolérance d'OSNR d'un système de configuration de relais, et en réponse à la détermination que la valeur minimale d'OSNR est supérieure à la tolérance d'OSNR, l'utilisation d'un point d'extrémité gauche d'un segment de relais correspondant à la valeur minimale d'OSNR dans le schéma de configuration de relais actuel comme étant une station indice pour une prochaine traversée pour poursuivre la traversée, jusqu'à ce que la station indice soit un point d'extrémité gauche de la voie de service ou que la station indice soit une frontière droite d'une plage de relais dans laquelle la station indice est située ; et
le calcul de la valeur minimale d'OSNR de la pluralité de segments de relais dans chacun de la pluralité de schémas de configuration de relais et le calcul du schéma de configuration de relais ayant la valeur maximale parmi les valeurs minimales d'OSNR parmi tous les schémas de configuration.

4. Procédé selon la revendication 1, dans lequel l'étape de l'agencement et de la combinaison de la pluralité de stations relais de gauche à droite au sein des plages formées par les frontières gauche et les frontières droites des stations relais, du calcul de la valeur minimale d'OSNR de la pluralité de segments de relais dans chacun de la pluralité de schémas de configuration de relais, et de la détermination du schéma de configuration de relais ayant la valeur maximale parmi les valeurs minimales d'OSNR parmi tous les schémas de configuration comprend :
le réglage d'un seuil d'OSNR x sur une tolérance d'OSNR d'un système de configuration de relais ;
lors d'une première traversée, la prise de frontières gauches d'une pluralité de plages de relais pour former un premier schéma de configuration de relais Y₁, l'obtention d'une valeur minimale d'OSNR xᵢ parmi des valeurs d'OSNR d'une pluralité de segments de relais dans le premier schéma de configuration de relais Y₁, et la détermination de si la valeur d'OSNR xᵢ est supérieure au seuil d'OSNR x ; et en réponse à la détermination que la valeur d'OSNR xᵢ est supérieure au seuil d'OSNR x, le réglage du seuil d'OSNR x sur la valeur minimale d'OSNR xᵢ parmi les valeurs d'OSNR de la pluralité de segments de relais dans le premier schéma de configuration de relais Y₁, et l'utilisation d'un point d'extrémité gauche d'un segment de relais correspondant à la valeur minimale d'OSNR dans le schéma de configuration de relais actuel comme étant une station indice pour une prochaine traversée pour poursuivre la traversée jusqu'à ce que la station indice soit un point d'extrémité gauche de la voie de service ou que la station indice soit une frontière droite d'une plage de relais dans laquelle la station indice est située ; et
le calcul que le schéma de configuration de relais actuel est le schéma de configuration de relais ayant la valeur maximale parmi les valeurs minimales d'OSNR de la pluralité de segments de relais.

5. Procédé selon la revendication 4, après l'utilisation du point d'extrémité gauche du segment de relais correspondant à la valeur minimale d'OSNR dans le schéma de configuration de relais actuel comme étant la station indice pour la prochaine traversée pour poursuivre la traversée, comprenant en outre :
l'utilisation de la station indice et des stations relais sur la gauche de frontières droites de la pluralité de plages de relais pour former un schéma de configuration de relais pour poursuivre la traversée.

6. Procédé selon la revendication 1, comprenant en outre :
la détermination de si des stations relais dans le schéma de configuration de relais final satisfont une exigence de transmission ; en réponse à la détermination que les stations relais dans le schéma de configuration de relais final satisfont toutes l'exigence de transmission, l'utilisation du schéma de configuration de relais ayant la valeur maximale parmi les valeurs minimales d'OSNR comme étant le schéma de configuration de relais optimisé final ; en réponse à la détermination que les stations relais dans le schéma de configuration de relais final ne satisfont pas toutes l'exigence de transmission, la sélection d'un schéma de configuration de relais ayant la valeur maximale parmi les valeurs minimales d'OSNR et satisfaisant l'exigence de transmission comme étant le schéma de configuration de relais optimisé final.

7. Serveur, comprenant un processeur (41), une mémoire (42) et un bus de communication, dans lequel le bus de communication est configuré pour permettre une connexion de communication entre le processeur (41) et la mémoire (42) ; et
le processeur (41) est configuré pour exécuter des instructions d'ordinateur stockées dans la mémoire pour réaliser le procédé d'optimisation de la configuration de relais selon l'une quelconque des revendications 1 à 6.

8. Support de stockage lisible par ordinateur, sur lequel est stocké au moins un programme, qui, lors de son exécution par au moins un processeur (41), amène l'au moins un processeur (41) à réaliser le procédé d'optimisation de la configuration de relais selon l'une quelconque des revendications 1 à 6.
